# EUROPÄISCHE PATENTSCHRIFT

(11) **EP 1 092 527 B1**
(45) Veröffentlichungstag und Bekanntmachung des Hinweises auf die Patenterteilung: **17.12.2003**
(21) Anmeldenummer: 00121267.9
(22) Anmeldetag: 05.10.2000
(51) Int. Cl.: B29C 67/24, B29C 47/10, C08J 3/205

(54) **Verfahren zur Umsetzung von reaktivem Polymer oder Monomer**
Process for the conversion of reactive polymers or monomers
Procédé de conversion de polymères ou monomères réactifs

(30) Priorität: 15.10.1999 DE 19949986
(43) Veröffentlichungstag der Anmeldung: 18.04.2001
(73) Patentinhaber: Fraunhofer-Gesellschaft zur Förderung der angewandten Forschung e.V., 80686 München (DE)
(72) Erfinder: Völkle, Dietmar, Dipl.-Ing., 8280 Kreuzlingen (CH); Muth, Oliver, Dr. Dipl.-Chem., 12277 Berlin (DE); Hirth, Thomas, Dr. Dipl.-Chem., 77815 Bühl (DE); Diemert, Jan, Dipl.-Ing., 76229 Karlsruhe (DE)

(56) Entgegenhaltungen:
- EP-A- 0 476 705
- EP-A- 0 684 264
- EP-A- 0 887 389
- WO-A-95/34606
- DE-A- 3 436 361
- US-A- 4 451 633
- US-A- 4 820 752
- US-A- 5 548 004
- US-A- 5 663 237
- US-A- 5 840 820
- PATENT ABSTRACTS OF JAPAN vol. 015, no. 425 (C-0879), 29. Oktober 1991 (1991-10-29) & JP 03 177407 A (OKURA IND CO LTD), 1. August 1991 (1991-08-01)

## Beschreibung

Die vorliegende Erfindung betrifft ein Verfahren zur Umsetzung von reaktivem Polymer oder Monomer.

Bei vielen Verarbeitungstechniken der Polymertechnik zum Beispiel dem Extrudieren, dem Spritzgießen oder dem Schäumen, werden vor der Verarbeitung des Polymers Zusatzstoffe zum Polymer hinzugegeben, die mit letzterem reagieren. Dabei haben solche Verarbeitungsprozesse häufig den Nachteil, daß diese bei hohen Prozeßtemperaturen durchgeführt werden müssen und somit das Polymer mit den zugesetzten reaktiven Substanzen schnell abreagiert. Dieses ist häufig unerwünscht, da die entsprechende Reaktion oft erst während der (Weiter)Verarbeitung des Polymers ablaufen soll. Setzt man beispielsweise beim Extrudieren ein Vernetzungsreagenz dem Polymer zu, so kann bereits vor dem Verlassen der Extruder-Schnecke durch schnelles Vernetzen eine vorzeitige Aushärtung des Polymers auftreten, so daß das Produkt unerwünschte Eigenschaften erhält, oder der Verarbeitungsprozeß negativ beeinflußt wird. Ein weiterer Nachteil vieler Polymerverarbeitungsprozesse, bei denen reaktive Komponenten hinzugesetzt werden, ist, daß letztere in der Polymermatrix nicht gleichmäßig verteilt werden. Das Ergebnis ist häufig, daß ein Polymerprodukt uneinheitlicher Qualität produziert wird. Außerdem kann nachteilig sein, daß für eine homogene Verteilung der reaktiven Komponenten in der Polymermatrix lange Mischzeiten in Kauf genommen werden müssen, was die Qualität des Produkts mindern kann. Dabei kann schon während des Mischens, also bevor eine homogene Mischung vorliegt, Polymer mit reaktiven Komponenten reagieren.

Dies hat entweder wiederum die Bildung von uneinheitlichem Polymerprodukt zur Folge, oder die Reaktion findet unerwünschterweise zu früh statt. Nachteilig ist auch, daß bei vielen Mischvorgängen keine homogene Verteilung erreicht wird und/oder die zu mischenden Komponenten geschädigt werden. Die vorstehend genannten Probleme treten häufig bei der reaktiven Extrusion auf. Die reaktive Extrusion von zum Beispiel thermoplastischen Polyurethanen mit Ethylen-Vinylacetat-Copolymeren wird in "U. Mieran, M. Rätzsch, Plaste und Kautschuk 39 (1992) 11, S. 364 - 367" beschrieben.

In vielen Polymerverarbeitungsprozessen, bei denen reaktive Komponenten hinzugesetzt werden, ist es somit wünschenswert, daß in schonender Art und Weise unmittelbar vor der (Weiter)Verarbeitung (z.B. Formgebung), die reaktiven Komponenten in das Polymer eingebracht werden, und dabei eine möglichst homogene Verteilung erreicht wird.

EP-A 0 476 705 offenbart eine Sprühpistole zum Versprühen von Beschichtungsmaterialien, wobei den Beschichtungsmaterialien ein überkritisches Fluid als ein die Viskosität reduzierendes Verdünnungsmittel zugegeben wird. Beim Versprühen der Beschichtungsmaterialien verdampft das überkritische Fluid und entweicht in die Atmosphäre. Dem überkritischen Fluid können auch Reaktivkomponenten zugegeben werden.

Aufgabe der vorliegenden Erfindung ist es ein Verfahren zur Verarbeitung von Polymer bereitzustellen, bei dem reaktive Komponenten einer reaktives Polymer und/oder Monomer enthaltenden Matrix zugegeben werden, wodurch eine chemische Reaktion des reaktiven Polymers und/oder des Monomers eingeleitet wird. Dabei sollen die reaktiven Komponenten in der Matrix fein verteilt werden, die Dauer des Verteilungsvorgangs kurz sein und die Verteilung in schonender Weise erfolgen. Es soll dabei möglich sein, auch schnelle Reaktionen zwischen reaktivem Polymer oder Monomer und reaktiven Komponenten durchzuführen, ohne daß ein Produkt uneinheitlicher Qualität erzeugt wird, und es soll eine (Weiter)Verarbeitung der mit reaktiven Komponenten versetzten Matrix noch vor Beendigung der Reaktion (des reaktiven Polymers und/oder des Monomers) erfolgen können.

Die Lösung dieser Aufgabe ist ein Verfahren zur Umsetzung von reaktivem Polymer und/oder Monomer in einer Polymerverarbeitungsanlage, bei dem
(a) in der Polymerverarbeitungsanlage eine Matrix, die reaktives Polymer und/oder Monomer enthält, bereitgestellt wird,
(b) eine oder mehrere reaktive oder reaktionsbeschleunigende Komponenten in einem komprimierten Fluid gelöst werden,
(c) die reaktiven oder reaktionsbeschleunigenden Komponenten in gelöster Form in die Matrix eingebracht und darin verteilt werden,
   dadurch gekennzeichnet, daß
(d) durch Druckabsenkung in der Matrix das Fluid entspannt und als Gas aus der Matrix entfernt wird, wobei die reaktiven oder reaktionsbeschleunigenden Komponenten in der Matrix verbleiben und chemisch mit dem reaktiven Polymer und/oder Monomer reagieren oder deren Reaktion katalysieren,
(e) die Matrix weiterverarbeitet wird, und
(f) das entspannte Fluid rekomprimiert und rezykliert wird.

Mit reaktivem Polymer sind Polymere und Oligomere gemeint, die bei Anwesenheit bestimmter reaktiver Komponenten chemische Reaktionen eingehen können. In der Regel weisen reaktive Polymere somit funktionelle Gruppen auf, die chemisch aktiviert werden können, oder die chemische Reaktionen eingehen können. Unter Monomeren sollen solche Verbindungen verstanden werden, die bei Anwesenheit reaktiver Komponenten Polyreaktionen wie Polyadditionen, Polykondensationen oder Polymerisationen eingehen können. Als Monomer können auch Monomermischungen eingesetzt werden. Unter Matrix kann jedes System verstanden werden, das feste und/oder flüssige Bestandteile enthält. In der Regel enthält eine Matrix vor allem Polymer, Oligomer und/oder Monomer. Als reaktive Komponenten sollen solche Verbindungen verstanden werden, die mit reaktivem Polymer und/oder Monomer reagieren können und/oder eine Reaktion des reaktiven Polymers und/oder des Monomers auslösen können und/oder Reaktionen des reaktiven Polymers und/oder des Monomers beschleunigen können. Es können ein oder mehrere reaktive Komponenten bei dem erfindungsgemäßen Verfahren eingesetzt werden.

Reaktives Polymer und/oder Monomer kann mit den reaktiven Komponenten reagieren, andererseits können die reaktiven Komponenten auch als Reaktionsbeschleuniger (insbesondere Katalysatoren) oder Initiatoren fungieren. Die chemische Reaktion, die das reaktive Polymer und/oder das Monomer eingeht, kann prinzipiell auch bereits dann erfolgen, wenn die reaktiven Komponenten in dem Fluid noch in gelöster Form vorliegen, also vor dem Entspannen. Andererseits jedoch kann die chemische Reaktion des reaktiven Polymers und/oder des Monomers erst während bzw. nach dem Entspannen beginnen.

Unter einem komprimierten Fluid soll ein komprimiertes Gas, eine komprimierte Flüssigkeit oder ein überkritisches Fluid verstanden werden. Ein überkritisches Fluid ist ein System, bei dem der Druck und/oder die Temperatur des Fluids oberhalb des für das jeweilige Fluid charakteristischen kritischen Drucks, der für das jeweilige Fluid charakteristischen kritischen Temperatur und/oder das Volumen unterhalb des kritischen Volumens liegt (diese spezifischen Drücke, Temperaturen und Volumina variieren mit dem eingesetzten Medium - zum Beispiel weist Kohlendioxid dabei andere Werte als Stickstoff auf). Das überkritische Fluid befindet sich somit oberhalb des kritischen Punktes, wobei ein derartiges System auch als überkritisches Gas oder als eine Flüssigkeit im überkritischen Zustand bezeichnet wird. Hierbei weist das überkritische Fluid annähernd die Viskosität des entsprechenden Gases und eine Dichte auf, die annäherungsweise der Dichte des entsprechenden verflüssigten Gases entspricht. Aufgrund dieser besonderen physikalischen Eigenschaften eignen sich komprimierte Fluide als Lösungsmittel, insbesondere als Extraktionsmittel. Komprimierte Fluide können somit große Mengen an reaktiven Komponenten in gelöster Form enthalten. Die besonders niedrige Viskosität der komprimierten Fluide ermöglicht eine schnelle Diffusion in die Matrix und eine homogene Verteilung der reaktiven Komponenten in der Matrix.

Der Vorteil des erfindungsgemäßen Verfahrens liegt in der gleichmäßig homogenen Verteilung der reaktiven Komponenten in der Matrix, in der schnellen Verteilung der Komponenten und der Möglichkeit, die Komponenten unmittelbar an der Stelle (bei kontinuierlichen Verfahren) bzw. zu dem Zeitpunkt (bei diskontinuierlichen Verfahren) einzubringen, wo bzw. wann die Reaktion von reaktivem Polymer und/oder Monomer erwünscht wird. Somit ist das Verfahren insbesondere für die schnelle Umsetzung von reaktivem Polymer und/oder Monomer geeignet. Unter schneller Umsetzung sind insbesondere solche Reaktionen gemeint, bei denen nach 10 Minuten, bevorzugt jedoch schon nach einer Minute, mindestens 50 % des umsetzbaren reaktiven Polymers oder mindestens 50 % des umsetzbaren Monomers bereits reagiert haben. Durch das erfindungsgemäße Verfahren erfolgt die Einbringung von reaktiven Komponenten in die Matrix nicht nur schneller und homogener, sondern in der Regel auch in schonenderer Weise als bei Mischvorgängen.

Der Eintrag der reaktiven Komponenten in die Matrix kann neben Diffusion und anschließender Ausfällung zusätzlich noch durch andere Mischvorgänge erfolgen. Jedoch ist in der Regel bei der homogenen Verteilung die Diffusion gegenüber anderen Mischvorgängen der wichtigste Vorgang. Das Entspannen hat die Diffusion des Fluids als Gas aus der Matrix heraus zur Folge. Dabei verbleiben die reaktiven Komponenten in der Matrix zurück. Das Entspannen (Druckabsenkung) geschieht meist schlagartig und ist in der Regel mit einer Temperaturänderung verbunden - vorteilhafterweise, zum Beispiel beim Entspannen von komprimiertem Kohlendioxid, mit einer Temperaturerniedrigung (das Ausfällen reaktiver Komponenten wird in der Regel auch durch Temperaturerniedrigung begünstigt). Bei dem schnellen Entspannen tritt häufig eine Schaumbildung auf. Falls eine solche nicht erwünscht sein sollte, kann dem Schäumen dadurch entgegengewirkt werden, daß das entspannte Fluid mit Hilfe einer Vakuumpumpe entfernt wird. Eine Entspannung kann jedoch auch durch Austrag in die Umgebung erfolgen. Der Diffusionsvorgang des Gases aus dem Polymer heraus wird maßgeblich durch den Gradienten der Druckabsenkung und der Temperatur der Matrix bestimmt. Als weiterer Einflußfaktor sind die rheologischen Eigenschaften der verwendeten Matrix zu nennen.

Als Fluid wird vorzugsweise ein Kohlendioxid enthaltendes Medium, bevorzugt reines Kohlendioxid eingesetzt. Der kritische Punkt von Kohlendioxid liegt bei etwa 31°C und 73 bar. Bei der Verwendung von Kohlendioxid kann als komprimiertes Fluid auch Kohlendioxid in der flüssigen Phase eingesetzt werden. Dabei liegt das Kohlendioxid in komprimierter Form bei Temperaturen unter 31°C, zum Beispiel in dem Bereich von -10°C bis +30°C, vorzugsweise zwischen +10°C und +30°C vor. Häufig ist jedoch der Einsatz von überkritischem Kohlendioxid als komprimiertes Fluid, bei Temperaturen von oberhalb etwa 31°C, der kritischen Temperatur des Kohlendioxids, besonders geeignet.

In einer bevorzugten Ausführungsform der Erfindung erfolgt das Bereitstellen der Matrix und das Bereitstellen des reaktive Komponenten enthaltenden, komprimierten Fluids in der gleichen Anlage. In der Regel erfolgt das Bereitstellen des reaktive Komponenten in gelöster Form enthaltenden, komprimierten Fluids durch Extraktion der reaktiven Komponenten mit dem komprimierten Fluid als Extraktionsmittel. Als reaktive Komponenten können insbesondere Vernetzungsreagenzien, Ringöffnungsreagenzien, Kettenübertragungsreagenzien, Pfropfungsreagenzien, Initiatoren, Monomere und/oder Reaktionsbeschleuniger eingesetzt werden. Es können auch nicht reaktive Komponenten zusammen mit den reaktiven Komponenten in die Matrix eingebracht werden. In der Regel erfolgt das Kontaktieren des komprimierten Fluids mit der Matrix durch Injektion des komprimierten Fluids in die Matrix mit Hilfe von Düsen. Meist erfolgt unmittelbar nach Entfernen des entspannten Fluids von der Matrix die (Weiter)Verarbeitung der Matrix. Unter (Weiter)Verarbeitung sollen die Arbeitsvorgänge verstanden werden, die mit der Matrix nach Schritt f), dem Entfernen des entspannten Fluids von der Matrix, erfolgen. Dies ist zum Beispiel der Einsatz der Matrix als Klebstoff oder als Lack, oder die Erzeugung von Granulat, oder das Herstellen von Formkörpern aus der Matrix (zum Beispiel beim Extrudieren bzw. Spritzgießen). Das entspannte Fluid wird rezirkuliert, wobei das entspannte Fluid zunächst wieder komprimiert wird und anschließend als Extraktionsmittel für reaktive Komponenten eingesetzt wird. Häufig erfolgt das Bereitstellen der Matrix, die reaktives Polymer und/oder Monomer aufweist und das Kontaktieren des komprimierten Fluids mit der Matrix in einer Polymerverarbeitungsanlage, insbesondere in einem Extruderreaktor. Als Polymerverarbeitungsanlagen kommen im Prinzip alle Vorrichtungen in Frage, mit denen Polymere verarbeitet werden können. Neben Extruderreaktoren können dies beispielsweise auch Spritzgußanlagen, Dosieranlagen, Anlagen für Klebetechnik und Lackierung sein. Beispiele für die Anwendung des erfindungsgemäßen Verfahren sind:
- Die Polyreaktion (Polyaddition) von Laurin- oder Caprolactam:
   In dem komprimierten Fluid werden die Aktivatoren und Katalysatoren - das sind in diesem Fall die reaktiven Komponenten - für die Polyreaktion gelöst Laurin- oder Caprolactam wird in der Polymerisationsverarbeitungsanlage plastifiziert. In die entsprechende Monomerschmelze werden die im Fluid gelösten Aktivatoren oder Katalysatoren injiziert. Nachfolgend erfolgt die entsprechende Polyreaktion zu einem thermoplastischen Polyamid.
- Zweikomponenten-Reaktionsharze:
   In der Polymerverarbeitungsanlage wird eine Komponente im plastischen Zustand vorgelegt. In diese Komponente wird die im komprimierten Fluid gelöste zweite Reaktionskomponente injiziert. Das Reaktionsgemisch härtet nachfolgend zu einem duroplastischen Werkstoff aus. Als Werkstoffbeispiele sind dabei zu nennen:
      - Duroplastische Polyurethane,
      - Reaktionssilikone
      - Epoxyde und
      - Polyester.

Die anliegende Zeichnung zeigt:

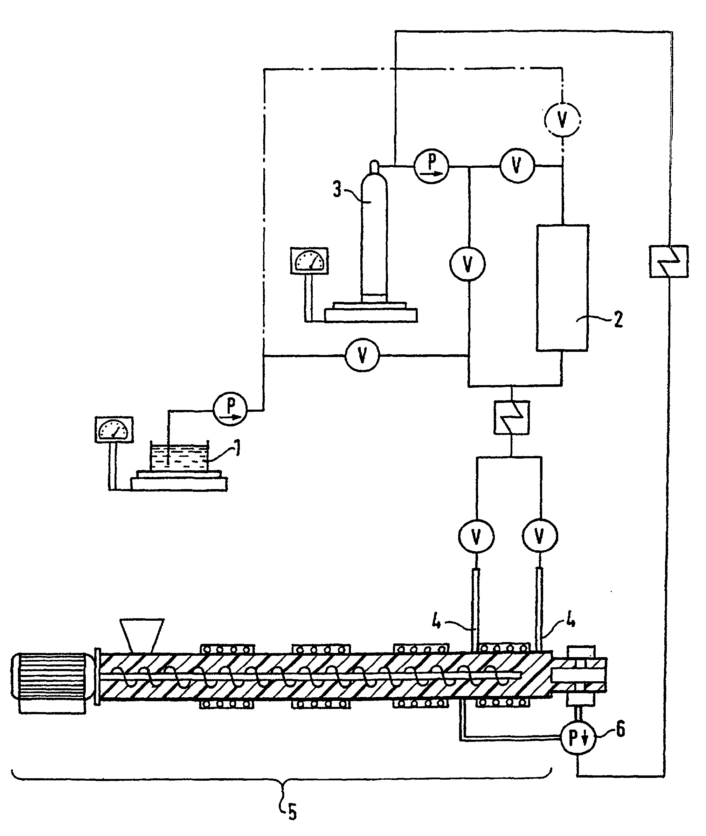

In Figur 1 ein Schema einer Anlage, die sich für die Durchführung des erfindungsgemäßen Verfahrens eignet.

Reaktive Komponenten 1 werden in einen Extraktor 2 für feste Komponenten geführt. Das komprimierte Fluid 3 wird durch den Extraktor 2 geführt, wobei darin enthaltene reaktive Komponenten 1 in dem komprimierten Fluid 3 extrahiert werden. Das komprimierte Fluid 3, das reaktive Komponenten 1 in gelöster Form enthält, wird zu den Injektionsdüsen 4 geführt und an diesen in die Polymerverarbeitungsanlage 5 injiziert. Die Polymerverarbeitungsanlage 5 enthält die Matrix, die wiederum reaktives Polymer und/oder Monomer aufweist. Nach der Injektion verteilt sich das komprimierte Fluid in der Matrix. Durch Druckabsenkung in der Matrix, insbesondere mit Hilfe der Vakuumpumpe 6, erfolgt die Entspannung des komprimierten Fluids 3, wobei die reaktiven Komponenten 1 ausgefällt werden. Dadurch wird die Reaktion des reaktiven Polymers und/oder des Monomers eingeleitet. Die Matrix wird anschließend zur (Weiter)Verarbeitung in ein Werkzeug 7 befördert. Die Entfernung des Fluids kann aus dem Werkzeug 7 und/oder aus der Polymerverarbeitungsanlage 5 heraus erfolgen. Das entspannte Fluid wird mit der Vakuumpumpe 6 rezirkuliert (vor dem erneuten Einsatz muß das Fluid dann natürlich verdichtet werden).

Im folgenden wird die vorliegende Erfindung anhand eines Ausführungsbeispiels näher erläutert.

### Beispiel:

Für die Durchführung des Versuchs wird eine Anlage eingesetzt, die der in der Zeichnung abgebildeten entspricht, wobei die Polymerverarbeitungsanlage 5 als Extruderreaktor ausgebildet ist. Der Extruderreaktor ist beheizt, wobei an der Seite, an der das Material für die Matrix in den Extruderreaktor eingegeben wird, eine Temperatur von ca. 120 °C und an der anderen Seite, an der sich das Werkzeug 7 befindet, eine Temperatur von ca. 170 °C, vorliegt. Als reaktives Polymer wird LDPE (Niederdruck-Polyethylen) eingesetzt, das bei den vorliegenden Temperaturen im Extruderreaktor in hochviskoser Form vorliegt - der Schmelzbereich des LDPE liegt in einem Bereich um ca. 115 °C. Die Matrix besteht aus dem LDPE. Als fluides Medium wird Kohendioxid verwendet ― das entsprechende komprimierte Fluid weist im dem Extraktor 2 einen Druck von ca. 100 bar und eine Temperatur von ca. 25 °C auf. Als reaktive Komponente 1 wird ein peroxidisches Vernetzungsreagenz, 1,3-Di(2-tert.-butylperoxidisopropyl)benzol, eingesetzt, welches sich in dem eingesetzten komprimierten Fluid 3 löst. Das gesamte Verfahren wird kontinuierlich durchgeführt. Der LDPE-Massedurchsatz beträgt 4 kg/h, der des fluiden Mediums 0,1 g/s Kohlendioxid. Das Vernetzer enthaltende komprimierte Fluid 3 wird mit Hilfe einer der in den Extruderreaktor eingebauten Injektionsdüsen 4 in die Matrix eingebracht. Diese Injektionsdüse befindet sich vor dem Werkzeug 7 kurz vor dem Ausgang des Extruderreaktors. Als Werkzeug 7 wird eine formgebende Vorrichtung eingesetzt. Bei den im Extruderreaktor gegebenen Verweilzeiten kann der Beginn der Vernetzung, die sich durch Aushärtung der Matrix bemerkbar macht, erst bei Austritt der Matrix aus dem Extruderreaktor festgestellt werden. Die Aushärtung ist bereits nach ca. 3 Minuten weitgehend abgeschlossen. In dem Werkzeug 7 wird ein ausgehärtetes Formteil aus vernetztem LDPE erhalten. Das entsprechende Material ist homogen und von einheitlicher Qualität.

## Patentansprüche

1. Verfahren zur Umsetzung von reaktivem Polymer und/oder Monomer in einer Polymerverarbeitungsanlage, bei dem
(a) in der Polymerverarbeitungsanlage eine Matrix, die reaktives Polymer und/oder Monomer enthält, bereitgestellt wird,
(b) eine oder mehrere reaktive oder reaktionsbeschleunigende Komponenten in einem komprimierten Fluid gelöst werden,
(c) die reaktiven oder reaktionsbeschleunigenden Komponenten in gelöster Form in die Matrix eingebracht und darin verteilt werden,
**dadurch gekennzeichnet, daß**
(d) durch Druckabsenkung in der Matrix das Fluid entspannt und als Gas aus der Matrix entfernt wird, wobei die reaktiven oder reaktionsbeschleunigenden Komponenten in der Matrix verbleiben und chemisch mit dem reaktiven Polymer und/oder Monomer reagieren oder deren Reaktion katalysieren,
(e) die Matrix weiterverarbeitet wird, und
(f) das entspannte Fluid rekomprimiert und rezykliert wird.

2. Verfahren nach Anspruch 1, **dadurch gekennzeichnet, dass** das komprimierte Fluid flüssiges CO₂ ist.

3. Verfahren nach Anspruch 1, **dadurch gekennzeichnet, dass** das komprimierte Fluid überkritisches CO₂ ist.

4. Verfahren nach einem der Ansprüche 1 bis 3, **dadurch gekennzeichnet, dass** die reaktiven Komponenten ausgewählt sind aus der Gruppe bestehend aus Vernetzungsreagenzien, Ringöffnungsreagenzien, Kettenübertragungsreagenzien, Pfropfungsreagenzien, Initiatoren, Monomeren und Reaktionsbeschleunigern.

5. Verfahren nach einem der Ansprüche 1 bis 4, **dadurch gekennzeichnet, dass** die Polymerverarbeitungsanlage ein Extruderreaktor ist.

6. Verfahren nach einem der Ansprüche 1 bis 5, **dadurch gekennzeichnet, dass** die Potymermatrix zu Granulat oder Formkörpem verarbeitet wird.

## Claims

1. Method for the conversion of reactive polymer and/or monomer in a polymer processing plant, in which method
(a) a matrix which contains reactive polymer and/or monomer is prepared in the polymer processing plant,
(b) one or more reactive or reaction-promoting components are dissolved in a compressed fluid,
(c) the reactive or reaction-promoting components are introduced in dissolved form into the matrix and distributed therein,
**characterised in that**
(d) due to a decrease in pressure in the matrix, the fluid expands and is removed as a gas from the matrix, the reactive or reaction-promoting components remaining in the matrix and reacting chemically with the reactive polymer and/or monomer or catalysing the reaction of same,
(e) the matrix is further processed, and
(f) the expanded fluid is recompressed and recycled.

2. Method according to claim 1, **characterised in that** the compressed fluid is liquid CO₂.

3. Method according to claim 1, **characterised in that** the compressed fluid is supercritical CO₂.

4. Method according to one of claims 1 to 3, **characterised in that** the reactive components are selected from the group comprising cross-linking reagents, ring-opening reagents, chain-transfer reagents, grafting reagents, initiators, monomers and reaction promotors.

5. Method according to one of claims 1 to 4, **characterised in that** the polymer processing plant is an extruder reactor.

6. Method according to one of claims 1 to 5, **characterised in that** the polymer matrix is processed into granules or moulded articles.

## Revendications

1. Procédé de réaction d'un polymère et/ou un monomère réactif dans une installation de transformation de polymères, dans lequel
(a) une matrice contenant le polymère et/ou le monomère réactif est mise à disposition dans l'installation de transformation de polymères,
(b) un ou plusieurs composants réactifs ou accélérateurs de réaction sont dissous dans un fluide comprimé,
(c) les composants réactifs ou accélérateurs de réaction sont introduits sous forme diluée dans la matrice et y sont dispersés,
**caractérisé en ce que**
(d) le fluide se détend du fait d'une chute de pression de la matrice et est éliminé de la matrice sous forme de gaz, les composants réactifs ou accélérateurs de réaction demeurant dans la matrice et réagissant chimiquement avec le polymère et/ou le monomère réactif ou catalysant leur réaction,
(e) la matrice est traitée et
(f) le fluide détendu est recomprimé et recyclé.

2. Procédé selon la revendication 1,
**caractérisé en ce que**
le fluide comprimé est du CO₂ liquide.

3. Procédé selon la revendication 1,
**caractérisé en ce que**
le fluide comprimé est du CO₂ surcritique.

4. Procédé selon l'une quelconque des revendications 1 à 3,
**caractérisé en ce que**
les composants réactifs sont choisis parmi le groupe comprenant des agents de réticulation, des réactifs d'ouverture de cycle, des agents de transfert de chaîne, des agents de greffage, des initiateurs, des monomères et des accélérateurs de réaction.

5. Procédé selon l'une quelconque des revendications 1 à 4,
**caractérisé en ce que**
l'installation de transformation de polymères est un réacteur d'extrudeuse.

6. Procédé selon l'une quelconque des revendications 1 à 5,
**caractérisé en ce que**
la matrice polymérique est traitée pour former des granulés ou des corps formés.
